# EUROPEAN PATENT APPLICATION

(11) **EP 3 654 472 A1**
(43) Date of publication of application: **20.05.2020**
(21) Application number: 18207085.4
(22) Date of filing: 19.11.2018
(51) Int. Cl.: H02G 3/08, H02G 3/12

(54) **ADJUSTABLE RECESSED BOX**

(30) Priority: 14.11.2018 IT 201800010338
(71) Applicant: Motti, Massimo, 35020 Legnaro (PD) (IT); Maniero, Denis, 35020 Legnaro (PD) (IT); Contin, Simone, 35020 Legnaro (PD) (IT); Cognolato, Alessandro, 35010 Limena (PD) (IT)
(72) Inventor: MOTTI, Massimo, 35020 LEGNARO (PD) (IT)
(74) Representative: Vinci, Marcello

(57) **Abstract**

An adjustable recessed box comprising, in its main parts, at least two mutually sliding elements, an internal element and an external element, which are telescopically slidable. Each of said elements comprises a first wall designed to constitute the side wall of the new recessed box; a second wall suitable to form part of the rear wall of the new recessed box; a third and a fourth wall suitable to form part of the upper wall and part of lower wall of the new recessed box. The two elements are coupled so that the first wall of the internal element is parallel to the first wall of the external element and so that the second, third and fourth walls of the internal element slide substantially on the inner surface of the corresponding second, third and fourth walls of the external element.

## Description

This patent relates to recessed boxes for electrical systems and in particular concerns a new adjustable recessed box.

Recessed boxes with a box-like structure open at the front are known in the prior art, formed generally by five walls, one of which is a rear wall, two side walls, and two upper and lower walls.

Recessed boxes are designed to be inserted and fixed in a seat arranged in a wall to support the electrical module plates or to operate as junction boxes for electrical cables.

These modules are commonly made up of electrical sockets and switches that guarantee the electrical services necessary for homes and offices.

The switch and electrical socket modules currently produced and marketed comply with safety and shape regulations.

Switch and electrical socket modules, which can be installed on plates for recessed boxes, are products that comply with standardized measurements.

The modules for electrical sockets for three-pole plugs of the type L CEI 23-50 have uniform width defined as a module.

The modules for sockets for round three-pole plugs of the type F CEE 7/4, normally known as German or Schuko plugs, have a uniform width that equals two standard modules.

As a result, the recessed boxes for module plates are box-shaped and are produced in sizes, or widths, suited to accommodate a certain number of modules.

Recessed boxes for three- and four-modules are known in the prior art and widely used.

There are also recessed boxes for two modules, five modules, and six modules, but since they are infrequently used they are produced in limited numbers and have a proportionately higher cost than the three or four module boxes.

The recessed boxes are fixed in a recess in the wall before laying the plaster, using cement mortar, and are connected to each other and to the electrical panel by means of corrugated flexible pipes in which the electrical control cables for the lighting system and electric power distribution cables are subsequently inserted.

When installing and fixing the recessed boxes, a box of the appropriate size according to the modules to be installed is chosen.

The choice of a recessed box of exact dimensions for the number of modules to be installed does not allow further modules to be added afterwards, unless the box is removed completely and replaced with a larger one.

The installers must have available, at the time of installation, a precise number of recessed boxes for the various needs of each installation. It is in fact counterproductive not to have large flush-mounted boxes available or to use combinations of smaller flush-mounting boxes ("ganging") to accommodate all the necessary modules in each individual installation site, just as it is to have to use large flush-mounted boxes when smaller flush-mounting boxes are not available.

It follows that installers must equip themselves with an adequate assortment of recessed boxes of various sizes, with the resulting cost of maintaining stock without the certainty of use.

It should be considered that module and plate producers tend to implement and use their own fastening systems for the modules and their plates, for example with front or rear quick lock systems or systems based on rotation brackets. Furthermore, these manufacturers implement and use their own fastening systems between the module plate and the flush-mounted box.

Structures, walls or wall cladding are used in the construction or adaptation of rooms, using panels, usually made of plasterboard and sometimes wood.

Recessed masonry boxes are not suitable for installation on plasterboard or wood panels, but specific recessed boxes are known in the prior art and marketed for installation on plasterboard or wood panels to which they are fixed using specific screws.

To overcome all the aforementioned drawbacks, a new adjustable recessed box has been designed and constructed.

One object of the new recessed box is to enable its width to be adjusted so as to accommodate a variable number of modules.

Another object of the new recessed box is to change its width without using additional elements.

Yet another object of the new recessed box is to change its width without having to modify its structure or the structure of its parts.

A further object of the new flush-mounted box is to change its width to predetermined positions.

Yet another object of the new recessed box is to change its width in successive positions at intervals equal to the width of one module.

A further object of the new recessed box used on plasterboard or wood panels is to change its width to add additional modules without having to remove the wires of existing modules. Still another object of the new flush-mounted box is to facilitate the operations of the workers on site, increasing the flexibility of use.

Yet another object of the new recessed box is to reduce the number of codes for manufacturers and for companies selling electrical equipment.

Another object of the new recessed box is to reduce packaging and logistics costs.

A further object of the new recessed box is to reduce production costs for manufacturers by using fewer moulds to cover the various cases.

Another object of the new recessed box is to allow its use with the module plates and modules of the various manufacturers.

Still another object of the new recessed box is the fact that, on the bottom in the closed position it has a maximum and increased IP4x protection as provided for by the CEI 64-8 standard for special locations and secondly it facilitates the maintenance and/or increases the insulation in energy-efficient structures.

A further object of the new recessed box is to have application elements for plasterboard walls or wood panels, allowing it to also be used for installation on masonry walls which are used as base and level for the finished plaster.

Another object of the new recessed box is to have lateral appendages suited to be used as joining elements for several boxes side by side or overlapping, at a suitable distance for the application of the front covers.

Still another object of the new recessed box is to allow its application both on masonry walls and on plasterboard or wood panels.

These and other aims, direct and complementary, are achieved by the new flush-mounting box comprising, in its main parts, two mutually sliding elements.

Each element of the new recessed box includes:
- a first wall, which constitutes the side wall of the new recessed box,
- a second wall, which forms part of the rear wall of the new recessed box,
- a third and a fourth wall, which form part of the upper wall and part of the lower wall of the new recessed box.

The walls of these two elements have similar but not equal dimensions and the two elements are coupled so that the first wall of one element is parallel to the first wall of the other element, and so that the second, third and fourth walls of one element substantially slide on the outer surface of the corresponding second, third and fourth walls of the other element.

For the sake of clarity, the internal element will be the one for which the second, third and fourth wall are more inside the recessed box, and the external element will be the one with the walls of larger dimensions and where the second, third and fourth walls will slide externally to the second, third and fourth walls of the internal element.

The first, third and fourth walls of the two elements have, near their edge opposite the second rear wall, a frame, or guide, or continuous raised projection orthogonal to the first, third, and fourth walls and facing the outside of the box.

This frame constitutes at least the box's front positioning stop.

In particular, the frame of the internal element has a smaller thickness than the frame of the external element, while the frame of the external element has a seat, groove or recess suited to accommodate and allow the sliding of the internal element's thinner frame.

This conformation of the two frames allows the correct and aligned sliding of the internal element in the external element.

On the external surface of the third and fourth walls of the internal element and on the inner surface of the third and fourth walls of the external element there are seats and projections suited to facilitate the mutual positioning of the internal element and the external element at regular intervals equivalent to the width of one common module.

The internal element may have a protrusion on the external surface of each third and fourth wall and the external element may have two or more seats on the inner surface of each third and fourth wall.

Alternatively, the internal element may have a seat on the outer surface of each third and fourth wall and the external element may have two or more protrusions on the inner surface of each third and fourth wall.

The front edge of the first, third, and fourth walls of each element have seats, hooks or other elements (10) suitable to fix the module plate of all the existing types to the new recessed box.

The walls of each element, internal and external, of the new box may have breakable and/or tear-off openings and/or portions so as to obtain openings to access the corrugated pipes and connecting cables.

The new recessed box thus constituted can be modified in its width by a minimum of houseable modules, in the position in which the internal element is translated to its maximum position inside the external element, to a maximum of houseable modules, in the position wherein the internal element is translated to its maximum position extracted from the external element.

For example, the external element and internal element may be made and shaped so as to house a minimum of three modules up to a maximum of six or seven modules with intermediate intervals of four and five modules.

The recessed box is thus designed to be fixed in a niche created in the wall.

There are additional elements that can be fixed and interchangeable on the side frame of the internal element and the external element or on the first and/or third and/or fourth wall of the internal and external elements, so as to allow the new recessed box to be fastened on panels, for example on plasterboard or wood, or can be used as a reference level for the finished plaster, or can be used as horizontal and vertical spacers between two new recessed boxes.

The new flush-mounting box can be of the type that can be extended in only one direction, as described above, or can be expanded in two directions as described below.

The new flush-mounting box which can be expanded in two directions comprises angular and connecting telescopic elements which are reciprocally sliding.

Each of these angular elements comprises five mutually orthogonal and/or parallel walls to each other, including:
- a first wall suited to constitute part of a side wall of the new recessed box,
- a second wall, orthogonal and joined to the first wall, suited to constitute part of the rear wall of the new recessed box,
- a third wall, orthogonal and joined to the edge of the first and second wall, suited to constitute part of a side wall of the new recessed box,
- a fourth wall joined to the two angular walls and parallel to the bottom with a further internal edge orthogonal to the fourth wall that forms the front edge,
- a fifth wall, joined and orthogonal to the fourth wall which forms the edge of the box.

These angular elements are mutually coupled so that each first and each third wall of each angular element is parallel and slides in adherence to a first or third wall of an identical adjacent angular element, and in such a way that each second wall of each angular element is parallel and slides in adherence to at least one second wall of an identical adjacent angular element.

On the edge of the first and third wall of each angular element and on the edge of the first wall of each connecting element there are protrusions to prevent the release of the various angular and connecting elements.

The characteristics of the new flush-mounting box will be better clarified by the following description with reference to the drawings, attached by way of a non-limiting example.

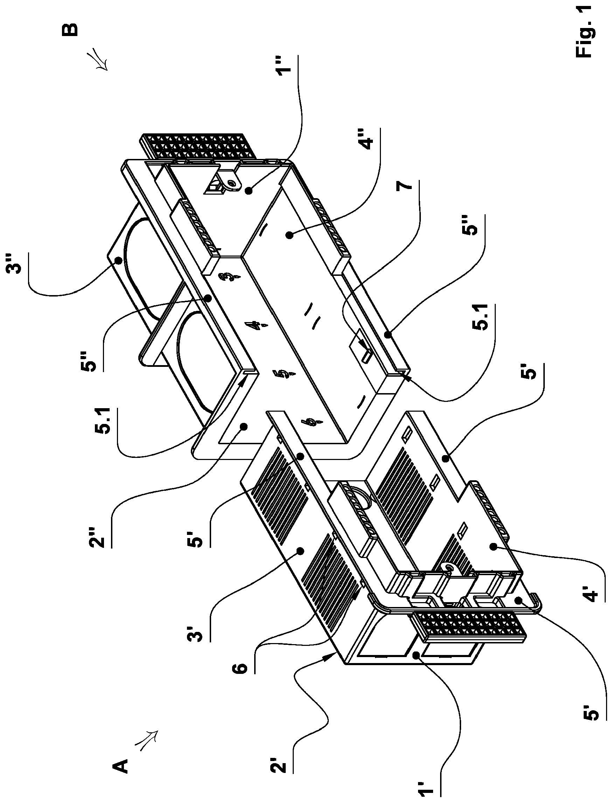

Figure 1 shows one embodiment of the new recessed box, comprising an internal element (A) and an external element (B).

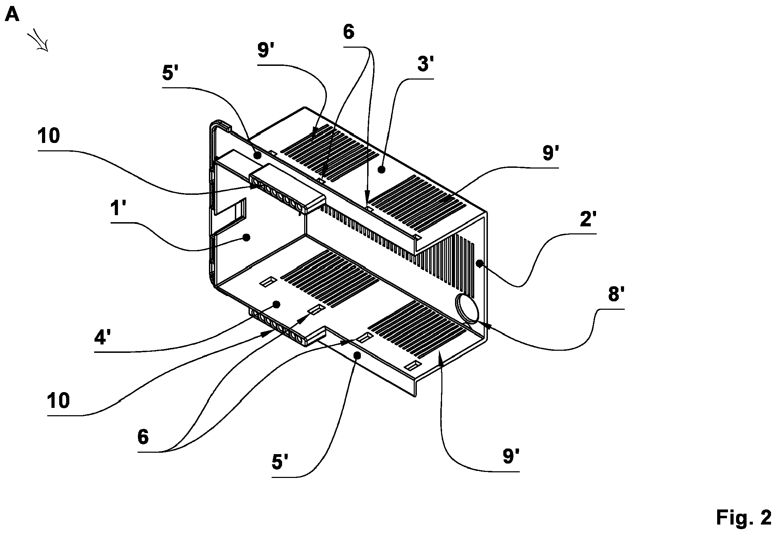

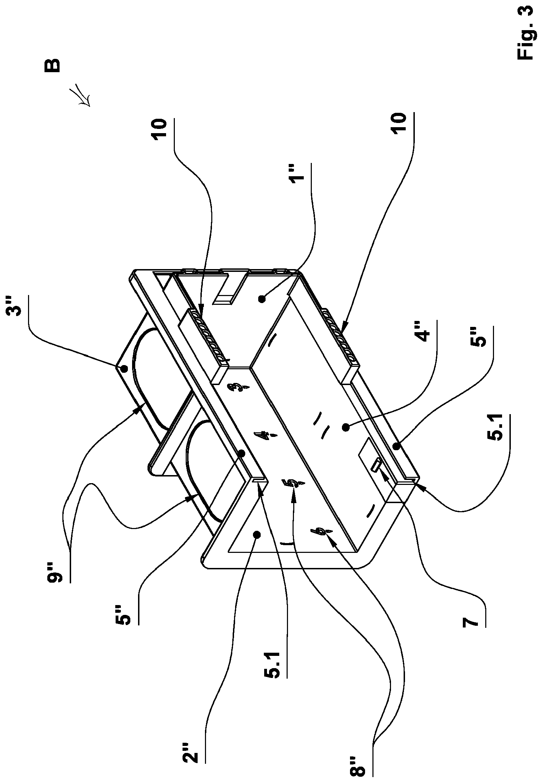

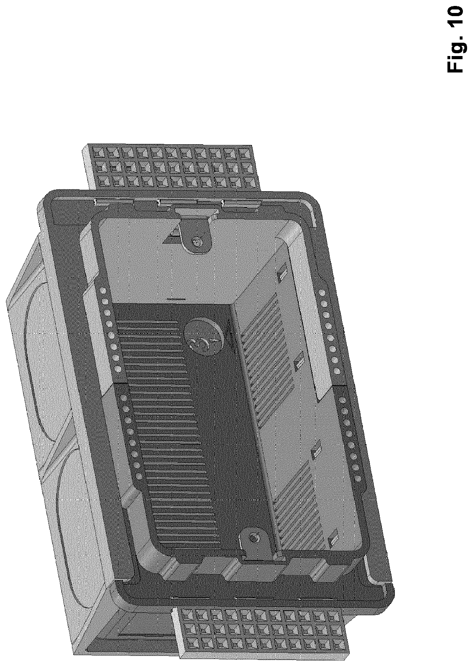

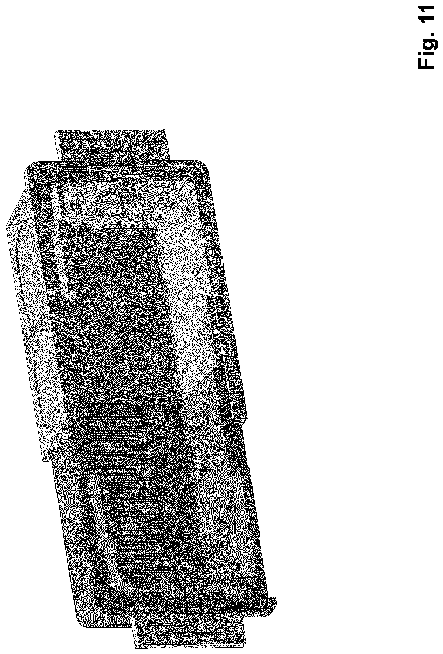

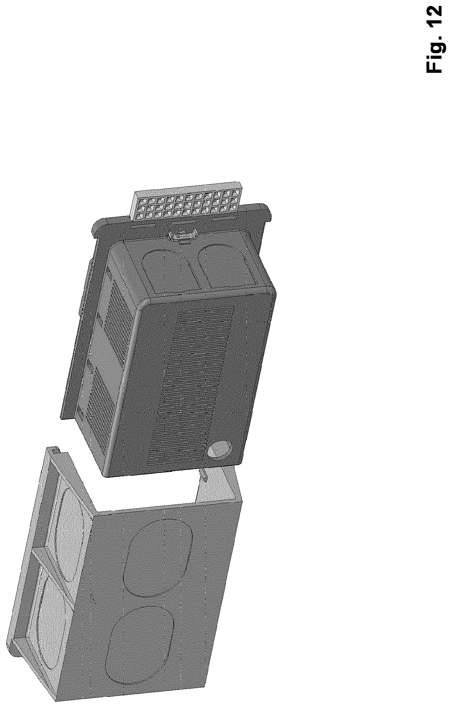

Figures 2 and 3 show respectively the internal element (A) and the external element (B), while Figures 10, 11 and 12 show respectively a front view with the two elements (A, B) completely closed; a front view with the two elements (A, B) fully open; a back view with the two elements (A, B) separated.

Each element (A, B) of the new flush-mounting box includes:
- a first wall (1', 1"), which constitutes the side wall of the new recessed box,
- a second wall (2', 2"), which forms part of the rear wall of the new recessed box,
- a third (3', 3") and a fourth (4', 4") wall, which form part of the upper wall and part of the lower wall of the new recessed box.

The walls (1', 1"; 2', 2"; 3', 3"; 4', 4") of the two elements (A, B) have similar but not equal dimensions and the two elements (A, B") are coupled so that the first wall (1') of the internal element (A) is parallel to the first wall (1") of the external element (B), and so that the second (2'), third (3') and fourth (4') wall of the internal element (A) slide substantially on the inner surface of the corresponding second (2"), third (3") and fourth (4") walls of the external element (B).

The first (1', 1"), the third (3', 3") and the fourth (4', 4") walls of the two elements (A, B) have a continuous frame (5', 5") near their edge opposite the second rear wall (2', 2").

This frame (5', 5") is orthogonal to the first (1', 1"), third (3', 3") and fourth (4', 4") walls and faces the outside of the box.

This frame (5', 5") constitutes at least the front positioning stop of the box.

The frame (5') of the internal element (A) has a smaller thickness than the frame (5") of the external element (B).

The frame (5") of the external element (B) has a seat, a groove (5.1) along its entire length on the third (3") and fourth (4") walls. This groove (5.1) is suitable to accommodate and allow the sliding of the internal element's (A) thinner frame (5').

This structure of the two frames (5', 5") allows the proper and aligned sliding of the internal element (A) in the external element (B): the internal element (A) penetrates the external element (B) keeping all the corresponding walls (1', 1"; 2', 2"; 3', 3"; 4', 4") parallel to each other and drawing together or moving apart the internal element's (A) first wall (1') and the external element's (B) first wall (1").

On the outer surface of the third (3') and fourth (4') walls of the internal element (A) and on the inner surface of the third (3") and fourth (4") walls of the external element (B) there are seats (6) and protrusions (7) suited to promote the mutual positioning of the internal element (A) and the external element (B) at regular intervals equivalent to the width of a common module.

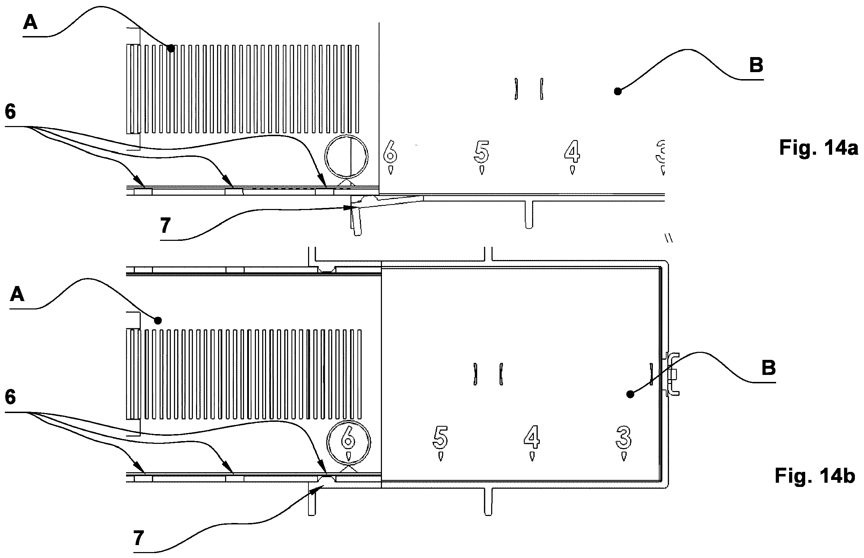

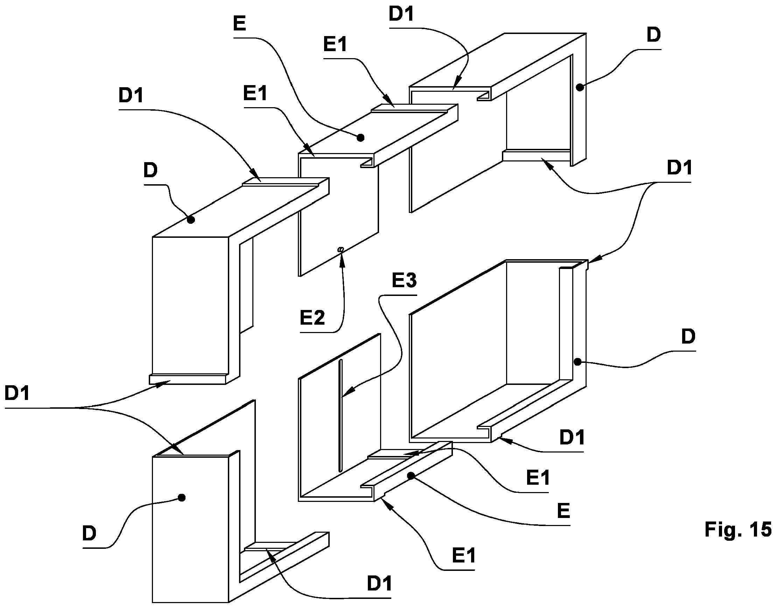

In this example, illustrated in detail in Figures 14a and 14b, the external element (B) has a protrusion (7) on the inner surface of each of its third (3") and fourth (4") walls and the internal element (A) has seats (6) on the outer surface of each of its third (3') and fourth (4') walls.

To facilitate the mutual positioning of the internal element (A) and external element (B), the external element (B) has numbers (8") on its second wall (2") while the internal element (A) has a window or opening (8') on its second wall (2'). At each individual position of the internal element (A) in the external element (B) it is possible to read through the internal element's (A) window or opening (8') the number (8") present on the external element (B) which indicates the number of modules that can be inserted in the new recessed box in that specific configuration.

On the walls (1', 1"; 2', 2"; 3', 3"; 4', 4") of the internal element (A) and the external element (B) there are openings and/or breakable (9', 9") or tear-off portions so as to obtain openings for the access of corrugated pipes and connecting cables.

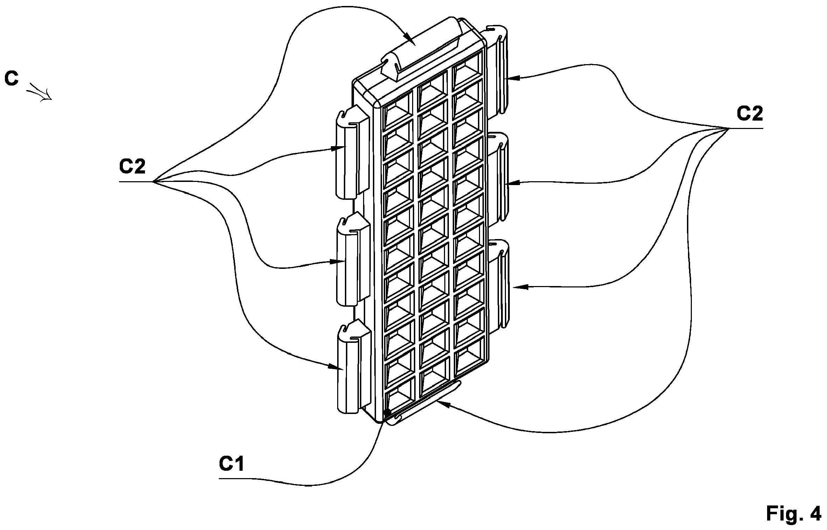

Figure 4 shows an adapter element (C), which can be applied to the internal element (A) and to the external element (B), so as to allow the new recessed box to be fixed on panels or as a level for the finished plaster.

This adapter element (C) comprises a main body (C1) and is provided with hooking appendages (C2) on one or more sides.

The main body (C1) has a substantially flat rectangular shape.

There are hooking appendages (C2) on one or more edges of the main body (C1).

These hooking appendages (C2) are suited to join the adapter element (C) to the internal element (A) and to the external element (B) of the new recessed box.

In particular, these hooking appendages (C2) are suited to be inserted and constrained in special seats present on the first walls (1', 1") of the internal element (A) and the external element (B) or on the frame (5', 5") of the first walls (1', 1") of the internal element (A) and external element (B).

When these hooking appendages (C) are joined to the internal (A) and external element (B) they are orthogonal to the first walls (1', 1"), constituting at the same time the support stop of the new recessed box to the inner surface of the panel, the physical body to which the screws or other fastening elements of the new recessed box installed on the panel are connected, a spacer element between two or more boxes positioned in parallel or in line with one another, and a base support on masonry for the finished plaster level.

An important characteristic of the invention is that, since the walls are elastic, the constraint/release of the support stops is carried out by deforming, by means of pressure, the elastic protrusion (7).

The new recessed box constructed as described above enables its width to be adjusted so as to accommodate a variable number of modules.

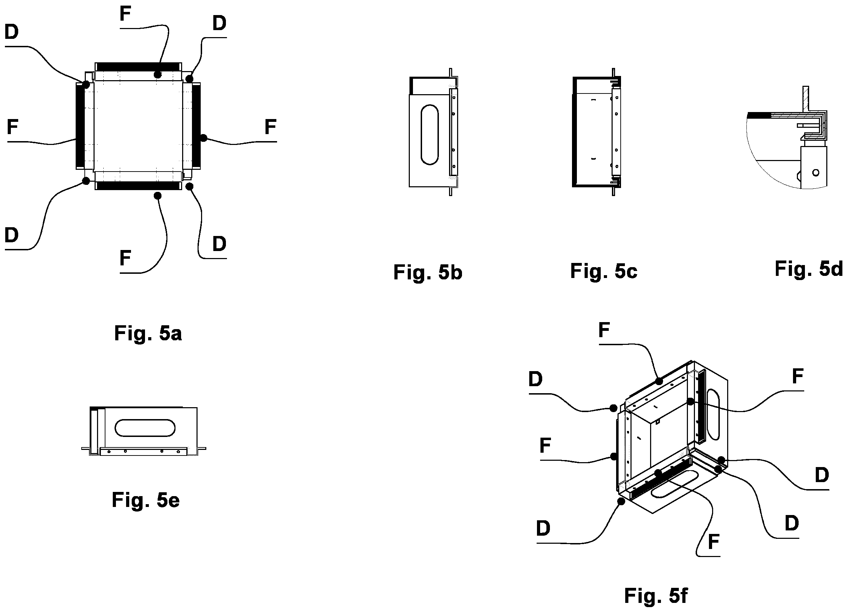

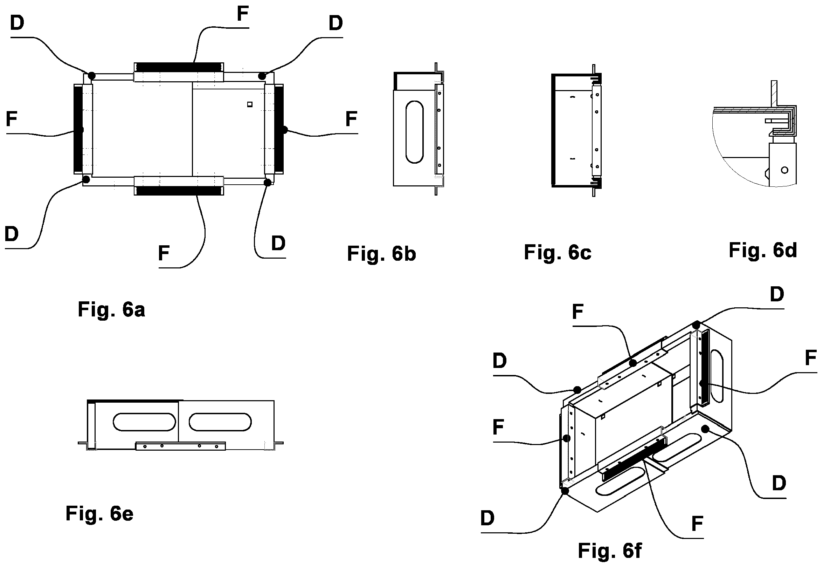

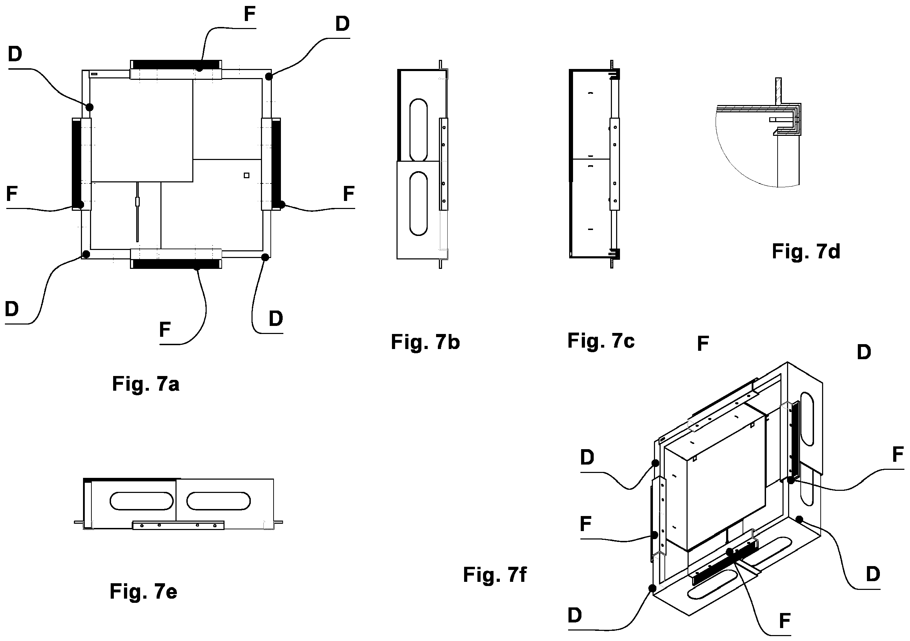

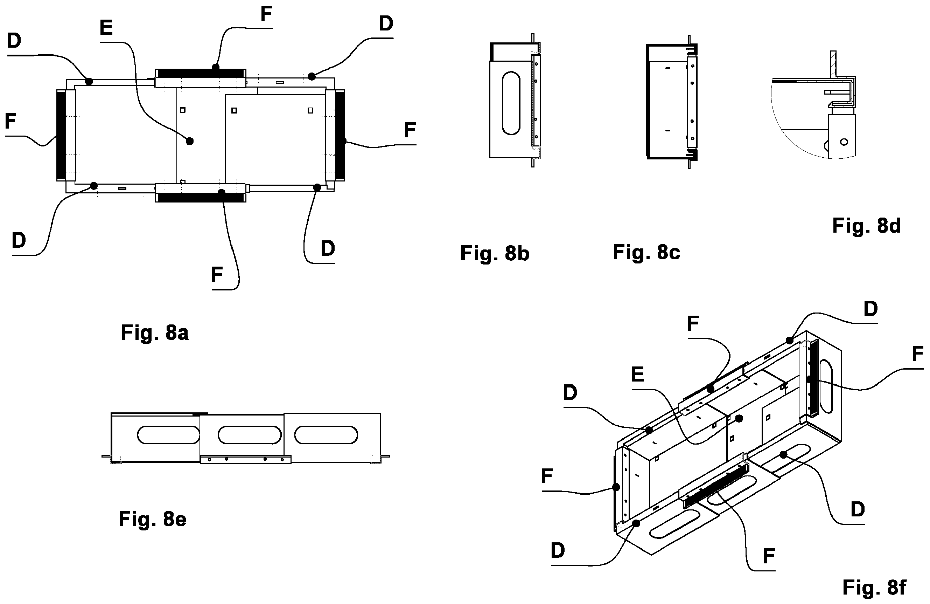

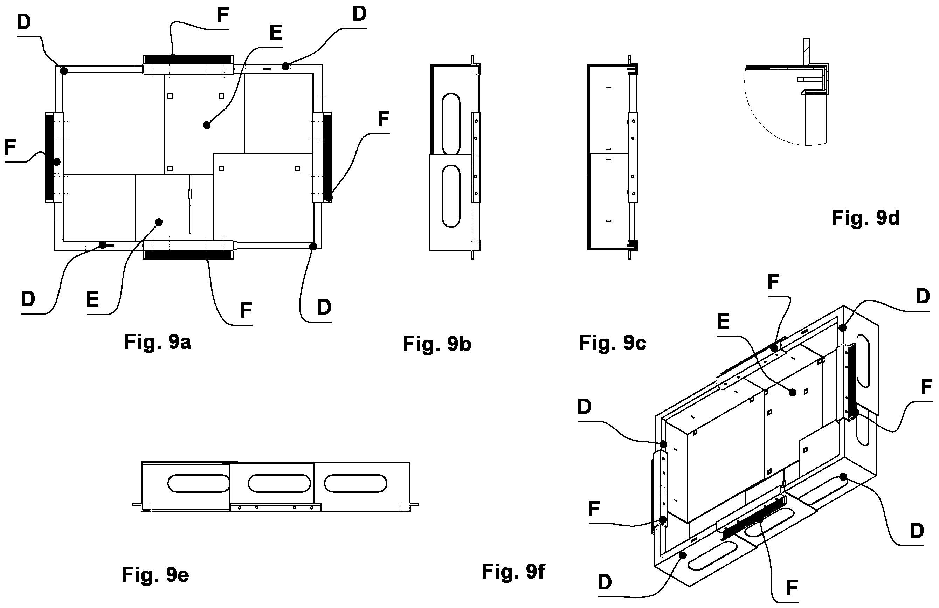

Figures 5a, 5b, 5c, 5d, 5e, 5f and the subsequent figures show, by way of a non-limiting example, the embodiment which can be expanded in two directions, hereinafter referred to as width and length.

In this example the new flush-mounted box comprises angular elements (D) and connecting elements (E).

Each of these angular elements (D) comprise five mutually orthogonal and/or parallel walls to each other, including:
- a first wall suited to constitute part of a side wall of the new recessed box,
- a second wall, orthogonal and joined to the first wall, suited to constitute part of the rear wall of the new recessed box,
- a third wall, orthogonal and joined to the edge of the first and second wall, suited to constitute part of a side wall of the new recessed box,
- a fourth wall, orthogonal to the first and third walls and parallel to the second wall or bottom, suited to form the front edge of the box,
- a fifth wall, orthogonal to the fourth wall.

The front edge of the box has two or more slots on each side to allow the hooking appendages (F) to be joined.

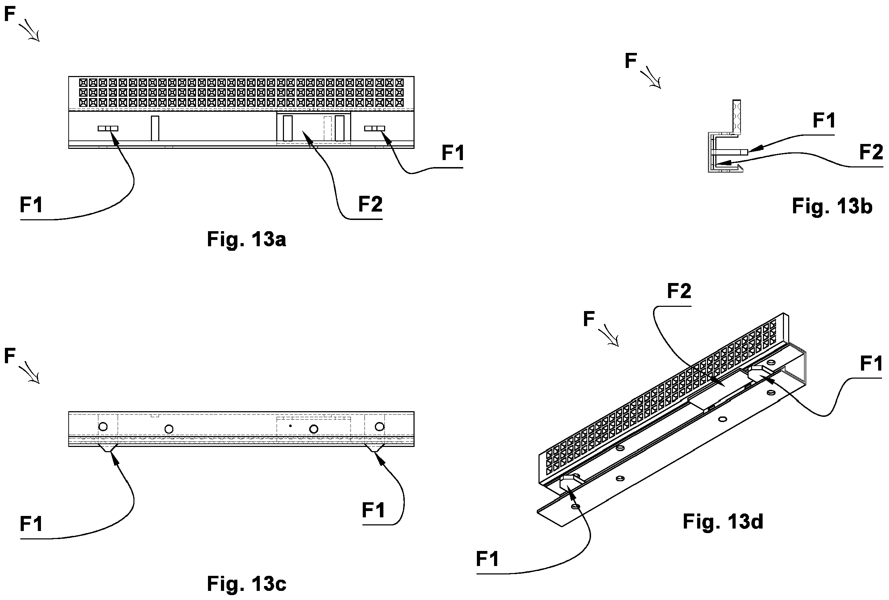

Figures 13a, 13b, 13c, and 13d respectively show a front view, a vertical section, a top view, and an axonometric view of an hooking appendage (F) on the wall.

These angular elements (D) are coupled so that each first and each third wall of each angular element is parallel and slides in adherence to a first or third wall of an identical adjacent angular element (D), and so that each second wall of each angular element is parallel and slides in adherence to at least one second wall of an identical adjacent angular element (D).

Each of the connecting elements (E), suited to slide telescopically between two of the angular elements (D), comprises four mutually orthogonal and/or parallel walls, including:
- a first wall, suited to constitute part of a side wall of the new recessed box, and suited to slide in adherence to a first and/or a third wall of an adjacent angular element (D),
- a second wall, orthogonal and joined to the first wall, suitable to constitute part of the rear wall of the new recessed box, and suitable to slide in adherence to third walls of adjacent angular elements (D);
- a third wall, orthogonal to the first wall and parallel to the second wall, suited to form the front edge,
- a fourth wall orthogonal to the third wall, suited to constitute a re-entrant edge.

The width and/or length of the new flush-mounting box constructed as described above can be changed without the use of additional elements.

The width and/or length of the new recessed box constructed as described above can be changed without having to modify its structure or the structure of its parts.

The width and/or length of the new recessed box constructed as described above can be changed in predetermined positions.

The width and/or length of the new recessed box constructed as described above can be changed to successive positions at regular intervals.

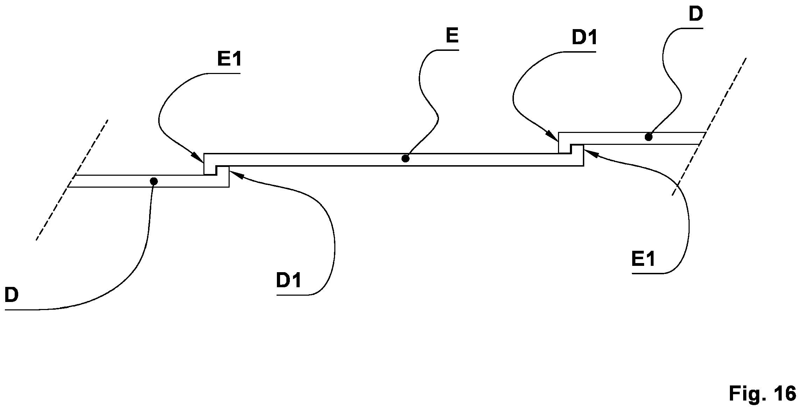

Said connecting elements (E) are connected to each other by an appendix (E2) and a slot (E3) in such a way that they can slide vertically, and in a horizontally constrained manner with respect to the other elements, as shown in Figure 16.

The new recessed box, as described above, can be applied either on masonry walls or on panels using the hooking appendages (F).

Said hooking appendages (F) are provided with portions (F1) which prevent the sliding of the hooking appendages (F) on the other elements (D, E) and the reciprocal sliding of the other elements (D, E), as well as of additional removable portions (F2) for greater adaptation on the frame of the box.

These coupling appendages (F) have various fundamental functions:
- block and fix the sliding of the walls,
- stiffen the box structure,
- facilitate fixing on plasterboard and wood panels,
- act as a support base on masonry holes to obtain the level of the finished plaster,
- allow the use of covers equipped with appropriate hooks or appendages.

If a new flush-mounting box, is already fixed in a configuration smaller than its maximum extension, it can be adjusted to create more space simply by reciprocally translating the external element (D) with the angular element (E).

The wall/side of each sliding element may have openings and/or breakable or tear-off portions so as to obtain openings to access the corrugated pipes and connecting cables.

These specifications are sufficient for the expert person to make the invention, as a result, in the practical application there may be variations without prejudice to the substance of the innovative concept.

Therefore, with reference to the preceding description and the attached drawings the following claims are made.

## Claims

1. Recessed box **characterized in that** it comprises an internal element (A) and an external element (B) telescopically slideable, each of said elements (A, B) comprising:
- a first wall (1', 1") designed to constitute the side wall of the new recessed box,
- a second wall (2', 2") suitable to form part of the rear wall of the new recessed box,
- a third (3', 3") and a fourth (4', 4") wall suitable to form part of the upper wall and part of the lower wall of the new recessed box,
*and wherein* said two elements (A, B) are coupled so that the first wall (1') of the internal element (A) is parallel to the first wall (1") of the external element (B), and so that the second (2'), third (3') and fourth (4') walls of the internal element (A) slide substantially on the inner surface of the corresponding second (2"), third (3") and fourth (4") walls of the external element (B).

2. Recessed box, according to claim 1, **characterized in that** on the outer surface of the third (3') and fourth (4') walls of the internal element (A) and on the inner surface of the third (3") and fourth (4") walls of the external element (B) there are seats (6) and protrusions (7) designed to facilitate the mutual positioning of the internal element (A) and the external element (B) at regular intervals equivalent to the width of a common module.

3. Recessed box, according to claims 1, 2, **characterized in that** on the outer surface of the third (3') and fourth (4') walls of the internal element (A) there are flexible appendages or protrusions and on the outer walls (4", 3") of the external element there are seats designed to facilitate the mutual positioning of the internal element (A) and the external element (B) at intervals equivalent to the width of a known module.

4. Recessed box, according to claims 2, 3, **characterized in that** said external element (B) has on its second wall (2") numbers (8") or references or indications and said internal element (A) has on its second wall (2') a window or opening (8'), *and wherein* at each mutual position of the internal element (A) and external element (B) defined by the housing of said protrusions (7) in said seats (6) one of said numbers (8") or references or indications of said external element (B) is visible through said window or opening (8') of said internal element (A).

5. Recessed box, according to the preceding claims, **characterized in that** said internal element (A) and said external element (B) comprise a continuous frame (5', 5") on their first (1', 1"), third (3', 3") and fourth (4', 4") walls near their edge opposite the second rear wall (2', 2"), *and wherein* said frame (5') of the internal element (A) has a smaller thickness than the frame (5 ") of the external element (B), *and wherein* said frame (5") of the external element (B) has a seat, a groove (5.1) along its entire length suitable to house and allow the sliding of the slightly thinner frame (5') of said internal element (A).

6. Recessed box, according to the preceding claims, **characterized in that** it comprises an adapter element (C), integral with or applicable to the internal element (A) and the external element (B), so as to allow the new recessed box to be fixed on panels.

7. Recessed box, according to claim 6, **characterized in that** said adapter element (C) comprises a main body (C1) and is provided with hooking appendices (C2), *and wherein* said main body (C1) has a substantially flat rectangular shape, *and wherein* on said one or more edges of said main body (C1) there are said hooking appendages (C2) suited for their attachment to the internal element (A) or the external element (B).

8. Recessed box, according to the preceding claims, **characterized in that** said internal element (A) and said external element (B) have breakable and/or tear-off openings and/or portions (9', 9") on their walls (1', 1"; 2', 2"; 3', 3"; 4', 4") for the access of corrugated pipes and connecting cables.

9. Recessed box, according to claim 1, **characterized in that** it comprises elements or portions suitable to stop the sliding of the elements (A, B), *and wherein* said elements or portions are elastic (7) and/or flexible such as to allow the user to flex them and allow the separation of the various elements (A, B).

10. Recessed box **characterized in that** it comprises elements which are reciprocally sliding telescopically, each of said elements comprises at least three mutually orthogonal walls, including:
- a first wall suited to constitute in whole or in part a side wall of the new recessed box,
- a second wall, orthogonal and joined to said first wall, suited to constitute part of the rear wall of the new recessed box,
- a third wall, orthogonal and joined to the edge of said first or second wall, suited to constitute part of another side wall of the new recessed box,
- a fourth wall orthogonal to the two corner walls and parallel to the back wall, suited to form the front edge of the box,
- a fifth wall which constitutes the hidden orthogonal edge to said fourth wall,
*and wherein* said elements are coupled so that each wall of each element is parallel and slides in adherence to a wall of an identical adjacent element, *and wherein* each second wall of each angular element is parallel and slides in adherence to at least one second wall of an identical adjacent element.

11. Recessed box, according to claim 10, **characterized in that** it comprises mutually sliding telescopic angular elements (D), each of said angular elements (D) comprising three mutually orthogonal walls, including:
- a first wall suited to constitute part of a side wall of the new recessed box,
- a second wall, orthogonal and joined to said first wall, suitable to constitute part of the rear wall of the new recessed box,
- a third wall, orthogonal and joined to the edge of said first and second walls, suited to constitute part of a side wall of the new recessed box,
*and wherein* said angular elements (D) are coupled so that each first and each third wall of each angular element (D) is parallel and slides in adherence to a first or third wall of an identical adjacent angular element (D), *and wherein* each second wall of each angular element (D) is parallel and slides in adherence to at least one second wall of an identical adjacent angular element (D).

12. Recessed box, according to claims 10, 11, **characterized in that** it comprises connecting elements (E) able to slide telescopically between two angular elements (D) of claim 8, each of said connecting elements (E) comprising two orthogonal walls, including:
- a first wall, suited to constitute part of a side wall of the new recessed box, and suited to slide in adherence to a first and/or a third wall of an adjacent angular element (D),
- a second wall, orthogonal and joined to said first wall, suited to constitute part of the rear wall of the new recessed box, and suited to slide in adherence to third walls of adjacent angular elements (D).

13. Recessed box, according to claims 10, 11, 12, **characterized in that** said angular elements (D) and said connecting elements (E) slide mutually from a compact position, wherein the first and third walls of angular elements (D) and connecting elements (E) are overlapping and the second walls of angular elements and connecting elements are overlapping, to a position of maximum expansion, in which the walls of each angular element (D) or connecting element (E) are not overlapping or are minimally overlapping with the walls of the adjacent angular elements (D) or of the connecting element (E).

14. Recessed box, according to claims 10, 11, 12, 13, **characterized in that** it comprises an adapter element (F), integral with or applicable to one or more elements (D, E) according to claims 9, 10, 11, so as to allow the new recessed box to be fixed to panels.

15. Recessed box, according to claims 10, 11, 12, 13, 14, **characterized in that** the walls of the angular elements (D) and connecting elements (E) have apertures or breakable and tear-off portions on their walls and sides for the access of corrugated pipes and connecting cables.

16. Recessed box, according to claims 10, 11, 12, 13, 14, 15, **characterized in that** it is composed of only four angular elements (D) without connecting elements (E) mutually coupled and telescopically sliding in adherence.

17. Recessed box, according to claims 10, 11, 12, 13, 14, 15, 16, **characterized in that** all the angular elements (D) and connections (E) are made in such a way that on the walls and sides of each element (D, E) a small protrusion (D1, E1) is provided so as to prevent the elements (D, E) from disengaging from each other.

18. Recessed box, according to claims 10, 11, 12, 13, 14, 15, 16, 17, **characterized in that** the front edge of the fourth walls of the angular elements (D) and the third walls of the connecting elements (E) have two or more slots such as to allow the hooking appendage (F) to connect.
